# EUROPEAN PATENT APPLICATION

(11) **EP 4 773 567 A1**
(43) Date of publication of application: **08.07.2026**
(21) Application number: 24804406.7
(22) Date of filing: 29.09.2024
(51) Int. Cl.: H04L 45/50, H04L 45/03, H04L 45/02, H04L 45/00, H04L 12/46

(54) **ENTRY SYNCHRONIZATION METHOD AND APPARATUS, NETWORK DEVICE, AND STORAGE MEDIUM**

(71) Applicant: New H3C Technologies Co., Ltd., Binjiang District Hangzhou Zhejiang 310052 (CN)
(72) Inventor: LIN, Changwang, Beijing 100102 (CN)
(74) Representative: IPAZ
(86) International application number: PCT/CN2024/122231
(87) International publication number: WO 2026/065216

(57) **Abstract**

A method and an apparatus for entry synchronization, a network device and a storage medium are provided, which relate to the technical field of communication, and are applied to a first forwarding node, wherein first forwarding node is in an AI network and connected to a host via a first port. The method includes: receiving a first packet sent by the host; learning a first global scheduling entry corresponding to the host according to the first packet, wherein the first global scheduling entry includes a system port identity of the first port, and the system port identity includes a device identity and a port identity; sending a second packet to a second forwarding node, wherein the second packet comprises the first global scheduling entry, to cause the second forwarding node to learn a second global scheduling entry which is the same as the first global scheduling entry. This solution can reduce the influence of entry synchronization on the control plane and improve the performance and extensibility of the control surface.

## Description

### Technical Field

The present disclosure relates to the technical field of communication, in particular to a method and an apparatus for entry synchronization, a network device and a storage medium.

### Background

An artificial Intelligence (Al) network is characterized by less data streams and high traffic. In order to ensure a load balance of the AI network, a Global Scheduling Ethernet technology is used in the AI network for sharing load on a packet-by-packet or cell-by-cell basis, which specifically can be as follows:
a head node encapsulates scheduling information for cells of each packet according to a global scheduling entry; and transmits multiple cells to a tail node in a load balance manner through multiple forwarding paths between the first node and the tail node. The tail node packages the multiple cells into a complete packet based on the global scheduling entry and the scheduling information carried in the cells of each packet, and rearranges multiple packets out of order.

In the above Global Scheduling Ethernet technology, it is necessary to synchronize the global scheduling entry between the head node and the tail node. At present, the synchronization of global scheduling entry are realized by a controller of a control plane, which seriously affects the performance and extensibility of the control plane.

### Summary

Examples of the present disclosure aim to provide a method and an apparatus for entry synchronization, a network device and a storage medium, so as to reduce the influence of entry synchronization on a control plane and improve the performance and extensibility of the control plane. The specific technical solutions are as follows:
In a first aspect, an example of the present disclosure provides a method for entry synchronization applied to a first forwarding node, wherein the first forwarding node is in an artificial intelligence AI network and connected to a host via a first port, the method including:
receiving a first packet sent by the host;
learning a first global scheduling entry corresponding to the host according to the first packet, wherein the first global scheduling entry includes a system port identity of the first port, and the system port identity includes a device identity and a port identity;
sending a second packet to a second forwarding node in the AI network, wherein the second packet includes the first global scheduling entry, to cause the second forwarding node to learn a second global scheduling entry which is the same as the first global scheduling entry.

In some examples, learning the first global scheduling entry corresponding to the host according to the first packet specifically includes:
acquiring a source address included in the first packet and acquiring the system port identity of the first port;
learning the first global scheduling entry corresponding to the host based on the acquired source address and the acquired system port identity.

In some examples, the second packet includes a tunnel encapsulation Type Length Value (TLV), and the tunnel encapsulation TLV includes a type field, a length field and a value field;
the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; wherein the type subfield is to indicate that the value subfield carries one system port identity; the length subfield is to carry a length value of the one system port identity; the value subfield is to carry the one system port identity.

In some examples, the second packet is an Ethernet Virtual Private Network (EVPN) Type2 route packet, and a Network Layer Reachability Information Label 2 field included in the EVPN Type2 route packet carries the system port identity.

In some examples, the second packet includes an EVPN Type2 route packet and an EVPN Type5 route packet;
a Network Layer Reachability Information Label 2 field included in the EVPN Type2 route packet carries the system port identify;
a gateway address field included in the EVPN Type5 route packet carries an Internet Protocol (IP) address of the host.

In some examples, learning the first global scheduling entry corresponding to the host according to the first packet specifically includes:
acquiring the system port identity of the first port, wherein the first port is to receive the first packet;
adding the system port identity to a multicast table corresponding to a virtual switching instance (VSI) to which the host belongs, to obtain the first global scheduling entry corresponding to the host.

In some examples, the second packet includes a tunnel encapsulation TLV, and the tunnel encapsulation TLV includes a type field, a length field and a value field;
the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; wherein the type subfield is to indicate that the value subfield carries multiple system port identities; the length subfield is to carry length values of the multiple system port identities; the value subfield is to carry the multiple system port identities;
the value subfield include a length sub-subfield and at least one value sub-subfield; wherein the length sub-subfield is to indicate a number of the multiple system port identities; the value sub-subfield is to carry one system port identifier.

In some examples, the type subfield is further to indicate that the value subfield carries a encapsulation index; the length subfield is further to carry a length value of the encapsulation index; the value subfield is further to carry the encapsulation index.

In the second aspect, an example of the present disclosure provides an apparatus for entry synchronization applied to a first forwarding node, wherein the first forwarding node is in an artificial intelligence AI network and connected to a host via a first port, the apparatus including:
a receiving module, to receive a first packet sent by the host;
a learning module, to learn a first global scheduling entry corresponding to the host according to the first packet, wherein the first global scheduling entry includes a system port identity of the first port, and the system port identity includes a device identity and a port identity;
a synchronization module, to send a second packet to a second forwarding node in the AI network, wherein the second packet includes the first global scheduling entry, to cause the second forwarding node to learn a second global scheduling entry which is the same as the first global scheduling entry.

In some examples, the learning module is specifically to: acquire a source address included in the first packet and acquire the system port identity of the first port; learn the first global scheduling entry corresponding to the host based on the acquired source address and the acquired system port identity.

In some examples, the second packet includes a tunnel encapsulation TLV, and the tunnel encapsulation TLV includes a type field, a length field and a value field;
the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; the type subfield is to indicate that the value subfield carries one system port identifier; the length subfield is to carry a length value of the one system port identity; the value subfield is to carry the one system port identity.

In some examples, the second packet is an EVPN Type2 route packet, and a Network Reachability Information Label 2 field included in the EVPN Type2 route packet carries the system port identity.

In some examples, the second packet includes an EVPN Type2 route packet and an EVPN Type5 route packet;
a Network Reachability Information Label 2 field included in the EVPN Type2 route packet carries the system port identity;
a gateway address field included in the EVPN Type5 route packet carries an IP address of the host.

In some examples, the learning module is specifically to: acquire the system port identity of the first port, wherein the first port is to receive the first packet; add the system port identity to a multicast table corresponding to a virtual switching instance to which the host belongs, to obtain the first global scheduling entry.

In some examples, the second packet includes a tunnel encapsulation TLV, and the tunnel encapsulation TLV includes a type field, a length field and a value field;
the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; wherein the type subfield is to indicate that the value subfield carries multiple system port identities; the length subfield is to carry length values of the multiple system port identities; the value subfield is to carry the multiple system port identities;
the value subfield includes a length sub-subfield and at least one value sub-subfield; wherein the length sub-subfield is to indicate a number of the multiple system port identities; the value sub-subfield is to carry one system port identifier.

In some examples, the type subfield is further to indicate that the value subfield carries a encapsulation index; the length subfield is further to carry a length value of the encapsulation index; the value subfield is further to carry the encapsulation index.

In an third aspect, an example of the present disclosure provides a network device including a processor and a machine-readable storage medium having a computer program stored therein that can be executed by the processor, wherein computer program causes the processor to carry out any one of the above methods.

In an fourth aspect, an example of the present disclosure provides a machine-readable storage medium having a computer program stored therein, wherein the computer program, when executed by a processor, carries out any one of the above methods.

In a fifth aspect, an example of the present disclosure provides a computer program which, when executed by a processor, carries out any one of the above methods.

In the technical solutions provided by the examples of the present disclosure, the forwarding node carries the global scheduling entry in the packet and sends it to another forwarding node, to cause the another forwarding node to learn the same global scheduling entry, that is, each global scheduling entry includes the system port identity of the port connected to the host when the host accesses the forwarding node. In the examples of the present disclosure, the synchronization of the global scheduling entry between forwarding nodes is realized by transmitting a packet between the forwarding nodes, and a controller is not necessary for synchronizing the global scheduling entry, which reduces the influence of the entry synchronization on the control plane, and improves the performance and extensibility of the control plane.

### Brief Description of the Drawings

The accompanying drawings described herein are used to provide a further understanding of the present disclosure and constitute a part of the present disclosure. The illustrative examples of the present disclosure and their descriptions are to explain the present disclosure and do not constitute an undue limitation on the present disclosure.
Fig. 1 is a first schematic diagram of an AI network architecture;
Fig. 2 is a second schematic diagram of the AI network architecture;
Fig. 3 is a third schematic diagram of the AI network architecture;
Fig. 4 is a schematic flowchart of a method for entry synchronization provided by an example of the present disclosure;
Fig. 5 is a first schematic diagram of block S402 provided by an example of the present disclosure;
Fig. 6a is a schematic diagram of an extended TLV field provided by an example of the present disclosure;
Fig. 6b is a first schematic diagram of a value field in the extended TLV field shown in Fig. 6a;
Fig. 6c is a second schematic diagram of the value field in the extended TLV field shown in Fig. 6a;
Fig. 6d is a third schematic diagram of the value field in the extended TLV field shown in Fig. 6a;
Fig. 7 is a schematic diagram of an EVPN Type2 route provided by an example of the present disclosure;
Fig. 8 is a schematic diagram of an EVPN Type5 route provided by an example of the present disclosure;
Fig. 9 is a second schematic diagram of block S402 provided by an example of the present disclosure;
Fig. 10 is a schematic diagram of an AI network architecture provided by an example of the present disclosure;
Fig. 11 is a schematic diagram of a processing flow inside a device provided by an example of the present disclosure;
Fig. 12 is a schematic structure diagram of an apparatus for entry synchronization provided by an example of the present disclosure;
Fig. 13 is a schematic structure diagram of a network device provided by an example of the present disclosure.

### Detailed Description

In order to make the objectives, technical solutions and advances of the present disclosure more clear, the present disclosure will be further described in detail with reference to the attached drawings and examples. Obviously, the described examples are only some, not all, of example of the present disclosure. All other examples acquired by those ordinary skilled in the art based on the examples in the present disclosure fall into the scope of protection of the present disclosure.

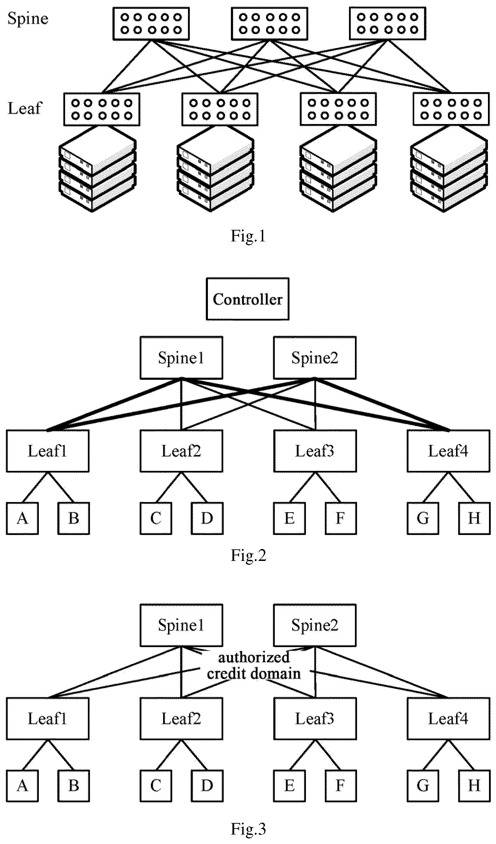

With the development of communication technology, the wide application of AI network technology has become an important driving force in various industries. The AI network adopts Spine-Leaf architecture, as shown in Fig. 1. The Spine-Leaf architecture is a network topology composed of two switching layers: Spine and Leaf. The Leaf switching layer contains a Layer 2 switch (namely a Leaf switch) for connecting a server and a storage device, and the Leaf switch is to aggregate traffic from the server and the storage device. The Spine switching layer contains a Layer 3 switch (namely a Spine switch) for route and forwarding, and belongs to the backbone of the network.

In the Spine-Leaf architecture, each Leaf switch is connected to a Spine switch. With this design, each server in the network can transmit data with another server through only the Leaf switch and the Spine switch, which greatly improves the efficiency of data transmission. Therefore, the Spine-Leaf architecture can provide a high-bandwidth, low-latency and non-blocking server-to-server connection, which enables efficient scheduling and management of Graphics Processing Unit (GPU) resources to support a load requirement of a large-scale AI work. The Spine-Leaf architecture is particularly important in high-performance computing cluster applications.

The Spine-Leaf architecture is also known as a distributed core network architecture. Because this network architecture is derived from the Switch Fabric inside the switch, the Spine-Leaf architecture is also known as a Fabric network architecture and belongs to a CLOS network model.

In the interconnection network, the forwarding node (such as the Leaf switch and Spine switch mentioned above) forwards a data stream in a load-balancing mode based on N-tuple information of the data stream, which can be specifically as follows: calculating a hash value of the N-tuple information of the data stream, determining a forwarding path corresponding to the hash value, where all packets of the data stream are forwarded along this forwarding path.

This load-balancing algorithm does not consider the traffic of the data stream, but only considers the N-tuple information of the data stream. In a network with more data streams and low traffic (that is, the number of data streams is large and the traffic of data streams is small), forwarding data streams by using the above load-balancing algorithm can effectively ensure the balancing of the load and improve network throughput.

However, the AI network has a characteristic of less data streams and high traffic (that is, the number of data streams is small and the traffic of data streams is high). In the AI network, when forwarding nodes forward data streams using the above load-balancing algorithm, the data streams are likely to be allocated to a few forwarding paths. The AI network as shown in Fig. 2 includes four Leaf switches, namely Leaf 1- Leaf 4, and two Spine switches, namely Spine 1-Spine 2, with Leaf 1- Leaf 4 connecting with Server A to Server H. When Server A sends data streams to Server H, if Leaf 1 uses the above-mentioned load-balancing algorithm, all the data streams sent from Server A to Server H are likely to be allocated to the thick solid paths as shown in Fig. 2, that is, all packets of the data streams sent from server A to server H are forwarded along the thick solid paths as shown in Fig. 2. This results in unbalanced load.

In order to solve the above-mentioned issue of unbalanced load, in the related technology, Global Scheduling Ethernet technology is used for sharing load on a packet-by-packet or cell-by-cell basis, specifically as follows.

### (1) Sending on a packet-by-packet basis

Each Leaf switch stores a global scheduling entry therein, which is a forwarding entry supporting the Global Scheduling Ethernet technology. The global scheduling entry may include an Internet Protocol (IP) address, a Media Access Control (MAC) address, a System Port Identity (SysPort ID), an encapsulation ID (that is, a encapsulation index), and the like. The SysPort ID can uniquely identify a port connected to the host on the Leaf switch in the AI network. The SysPort ID includes a device ID and a port ID, etc.

After receiving packets from a source host, the head node (a Leaf switch) encapsulates scheduling information for the packets according to the global scheduling entry, wherein the scheduling information includes a SysPort ID, a sequence number (Sequence) of a packet, an IP address, a MAC address or an encapsulation ID; and forwards the packets to a tail node through multiple forwarding paths between the head node and the tail node (a Leaf switch) in a polling manner.

The tail node receives multiple packets sent from the head node through the multiple forwarding paths, determines a plurality of packets belonging to the same data stream based on the scheduling information carried in the packets according to the global scheduling entry, and rearranges the plurality of packets out of order; sends the rearranged packets to a destination host.

### (2) Sending on a cell-by-cell basis

Each Leaf switch stores a global scheduling entry therein, which is a forwarding entry supporting the Global Scheduling Ethernet technology. The global scheduling entry may include an IP address, a MAC address, a SysPort ID, an encapsulation ID, etc.

After receiving packets from the source host, the head node divides the packets into multiple cells; encapsulates scheduling information for each cell according to the global scheduling entry, wherein the scheduling information includes a SysPort ID, a Sequence of the packet, an IP address, a MAC address or an encapsulation ID; and forwards the cells to the tail node through multiple forwarding paths between the head node and the tail node (a Leaf switch) in a polling manner.

The tail node receives the multiple cells sent from the head node through the multiple forwarding paths, determines a plurality of cells belonging to the same packet of the same data stream based on the scheduling information carried in the cells according to the global scheduling entry, packages the plurality of cells into a complete packet, and rearranges multiple packets out of order; sends the rearranged packets to a destination host.

With the Global Scheduling Ethernet technology, an authorized credit domain can be deployed within the AI network without the need to deploy an Explicit Congestion Notification (ECN)/Priority-based Flow Control (PFC) domain, as shown in Fig. 3, which realizes a mechanism of scheduling first and sending later, and realizes a preventive control of congestion, a deterministic and precise control of congestion, and an optimal balance between the congestion and the link load.

In AI network, whether sending on a packet-by-packet basis or sending on a cell-by-cell basis, the global scheduling entry need to be synchronized between the head node and the tail node. At present, the synchronization of the global scheduling entry is realized by the controller as shown in Fig. 2, which seriously affects the performance and extensibility of the control plane.

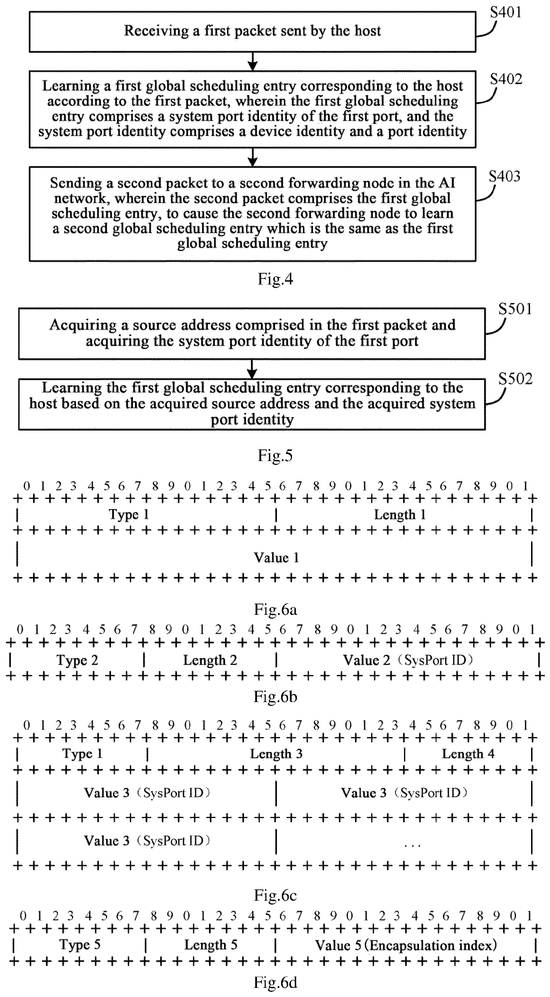

In order to solve the above issues, an example of the present disclosure provides a method for entry synchronization, as shown in Fig. 4, applied to a first forwarding node, wherein the first forwarding node is in an AI network and connected to a host via a first port. The method includes the following blocks:
Block S401, receiving a first packet sent by the host;
Block S402, learning a first global scheduling entry corresponding to the host according to the first packet, wherein the first global scheduling entry includes a system port identity of the first port, and the system port identity includes a device identity and a port identity;
Block S403: sending a second packet to a second forwarding node in the AI network, wherein the second packet includes the first global scheduling entry, to cause the second forwarding node to learn a second global scheduling entry which is the same as the first global scheduling entry.

In the technical solution provided by the example of the present disclosure, the forwarding node carries the global scheduling entry in the packet and sends it to another forwarding node, to cause the another forwarding node to learn the same global scheduling entry, that is, each global scheduling entry includes the system port identity of the port connected to the host when the host accesses the forwarding node. In the example of the present disclosure, the synchronization of the global scheduling entry between forwarding nodes is realized by transmitting a packet between the forwarding nodes, and a controller is not necessary for synchronizing the global scheduling entry, which reduces the influence of the entry synchronization on the control plane, and improves the performance and extensibility of the control plane.

In the example of the present disclosure, the first forwarding node and the second forwarding node may be any Leaf switch in the AI network, respectively. The first forwarding node and the second forwarding node can also be referred to as a Network Cloud Packet-Forwarder (NCP) node. The first port can be any port on the first forwarding node, and the host accesses the first forwarding node through the first port.

In the above block S401, the first packet may be a packet actively sent by the host, such as a packet sent by the host to other hosts. The first packet may also be a response packet fed back according to the packet sent by the first forwarding node, which is not limited.

After the host accesses the first forwarding node, the host can send a packet, that is, the first packet, to the first forwarding node, and the first forwarding node receives the first packet through the first port.

In the above block S402, the first global scheduling entry is a global scheduling entry corresponding to the host. The global scheduling entry can be a Layer 2 entry, such as a MAC entry. At this time, the global scheduling entry can include the MAC address of the host, SysPort ID, etc., as the MAC entry shown in Table 1.

**Table 1**

| | |
|---|---|
| **MAC address of the host** | **SysPort ID** |

The global scheduling entry can also be a Layer 3 entry, such as an Address Resolution Protocol (ARP) entry and a Forwarding Information Base (FIB) entry. At this time, the global scheduling entry can include the IP address of the host, the MAC address of the host, the next-hop IP address, the SysPort ID, and the like, as the ARP entry shown in Table 2 and the FIB entry shown in Table 3.

**Table 2**

| | | |
|---|---|---|
| **Next hop IP address** | **MAC address of the host** | **SysPort ID** |

**Table 3**

| | | |
|---|---|---|
| **IP address of the host** | **Next hop IP address** | **SysPort ID** |

The first forwarding node learn the global scheduling entry in an active or passive mode as follows:

### (1) Learning the global scheduling entry in an active mode.

The first forwarding node sends an ARP request to the host after detecting that the host accesses the first forwarding node; then the host feeds back an ARP response (such as the first packet) corresponding to the ARP request to the first forwarding node. The first forwarding node extracts the required information from the ARP response to generate the global scheduling entry (such as the first global scheduling entry) corresponding to the host.

### (2) Learning the global scheduling entry in a passive mode.

After the host accesses the first forwarding node, the first forwarding node will not learn the global scheduling entry corresponding to the host. When a packet (such as the first packet) sent by the host arrives at the first forwarding node, the first forwarding node extracts the required information from the packet to generate the global scheduling entry corresponding to the host.

In the example of the present disclosure, the mode in which the first forwarding node learns the global scheduling entry is not limited.

In the above block S403, after having learnt the first global scheduling entry, the first forwarding node generates the second packet, and sends the second packet to the second forwarding node, wherein the second packet includes information of the first global scheduling entry. After receiving the second packet, the second forwarding node can extract the information of the first global scheduling entry from the second packet and learn the second global scheduling entry which is the same as the first global scheduling entry, that is, the second global scheduling entry includes a system port identity of the first port.

In the example of the present disclosure, the first global scheduling entry may be an entry for realizing unicast or an entry for realizing broadcast and multicast.

When the first global scheduling entry is an entry for realizing unicast, as shown in Fig. 5, the above block S402 may include:
Block S501: acquiring a source address included in the first packet and acquiring the system port identity of the first port.

Block S502: learning the first global scheduling entry corresponding to the host based on the acquired source address and the acquired system port identity.

In the example of the present disclosure, the source address of the first packet is an address of the host. The first forwarding node acquires required information according to the type of the established entry, such as the first forwarding node acquires the MAC address of the host, SysPort ID and the like when establishing a Layer 2 entry, and acquires the IP address of the host, the MAC address of the host, the SysPort ID and the like when establishing a Layer 3 entry; and then, establishes the corresponding global scheduling entry based on the acquired information.

In some examples, in order to realize the synchronization of the global scheduling entry shown in Fig. 5, the second packet includes a tunnel encapsulation TLV, which is an added extended TLV, and the tunnel encapsulation TLV may include a type field, a length field and a value field, as shown in Fig. 6a.

The type field is to indicate that the value field carries tunnel encapsulation information, and is such as Type 1 field shown in Fig. 6a, where a length of the Type 1 field is 2 bytes (Octets); the length field is to carry a length value of the tunnel encapsulation information, that is, the length field is to carry the length value of the value field, and is such as Length 1 field shown in Fig. 6a, where a length of the Length 1 field is 2 bytes; the value field is to carry the tunnel encapsulation information, and is such as Value 1 field shown in fig. 6a, where a length of the Value 1 field is variable.

In the example of the present disclosure, as shown in fig. 6b, the value field may include a type subfield, a length subfield and a value subfield. The type subfield is to indicate that the value subfield carries one system port identity, and is such as Type 2 field shown in Fig. 6b, where the length of the Type 2 field is 1 byte; the length subfield is to carry a length value of the one system port identity, that is, the length subfield is to carry a length value of the value subfield, and is such as Length 2 field shown in Fig. 6b, where the length of the Length 2 field is 1 byte; the value subfield is to carry the one system port identity, and is such as Value 2 field shown in Fig. 6b, where the length of the Value 2 field is 2 bytes.

In the example of the present disclosure, the length of each field shown in Figs. 6a and 6b is only exemplary, and is not for a limiting purpose. The first forwarding node can extend the route attribute using the Border Gateway Protocol (BGP), to cause the SysPort ID to be carried in the second packet.

In this example of the present disclosure, in order to facilitate the implementation and reduce the adjustment to the existing protocol, the first forwarding node can use an existing route packet to carry the SysPort ID.

In an example, the second packet includes an EVPN Type2 route packet, and a Network Layer Reachability Information (NLRI) Label 2 field included in the EVPN Type2 route packet carries the SysPort ID.

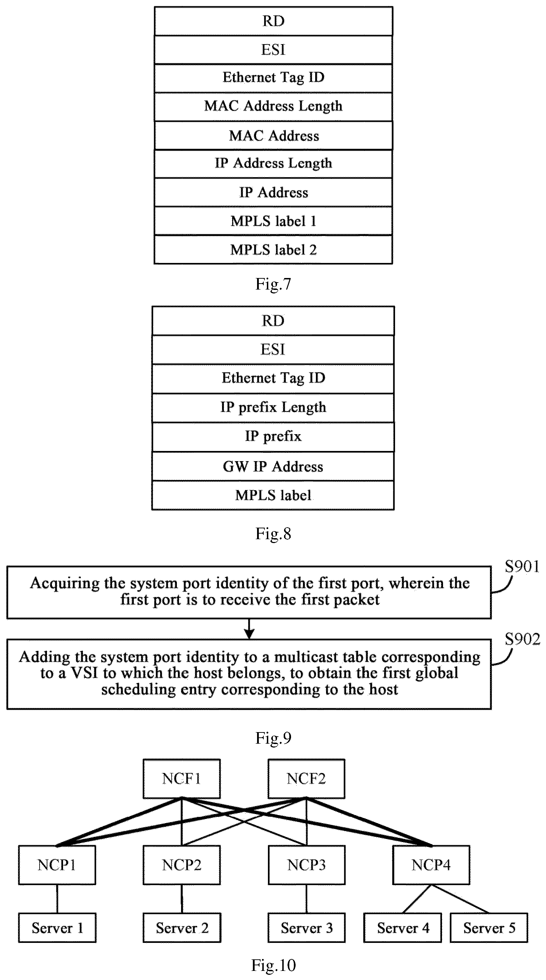

The EVPN Type2 route packet shown in Fig. 7 includes a Route Distinguisher (RD) field an Ethernet Segment Identifier (ESI) field, an Ethernet Tag ID field, a MAC Address Length field, a MAC Address field, an IP Address Length field, an IP Address field, a Multi- Protocol Label Switching (MPLS) Label 1 field and a MPLS Label 2 field. The MPLS Label 2 field is the above NLRI Label 2 field. In the example of the present disclosure, the first forwarding node may fill a high bit of the NLRI Label 2 field with the SysPort ID, such as occupying the high bit of 2 bytes to fill the SysPort ID.

With the EVPN Type2 route packet, the first forwarding node can send a Layer 2 global scheduling entry, such as the MAC entry, to the second forwarding node.

In some examples, in order to realize a Layer 3 global scheduling entry, the first forwarding node can synchronize entry information of the global scheduling entry to the second forwarding node by using the above-mentioned EVPN Type5 route packet, while synchronizing the entry information of the global scheduling entry to the second forwarding node by using the above-mentioned EVPN Type2 route packet, to cause the second forwarding node to learn a complete global scheduling entry.

That is, the above second packet may include an EVPN Type2 route packet and an EVPN Type5 route packet, and the NLRI Label 2 field included in the EVPN Type2 route packet carries the SysPort ID. Please refer to the related description in Fig. 7 above for details. The gateway address field included in the EVPN Type5 route packet carries the IP address of the host. The IP address of the host will also be carried in the IP address field in the EVPN Type2 route packet, that is, the next hop address carried in the IP address field in the EVPN Type2 route packet is the same as the address carried in the gateway address field.

The EVPN Type2 route packet as shown in fig. 8 includes an RD field, an ESI field, an Ethernet Tag ID field, an IP prefix Length field, an IP prefix field, a gateway address (GW IP Address) field and an MPLS Label field.

Based on the IP address carried in the gateway address field in the EVPN Type5 route packet, the second forwarding node can find the corresponding EVPN Type2 route packet, and further obtain all the information required for learning the global scheduling entry and learn the first global scheduling entry.

When the first global scheduling entry is an entry for realizing multicast, as shown in Fig. 9, the above block S402 may include:
Block S901, acquiring the system port identity of the first port, wherein the first port is to receive the first packet;
Block S902: adding the system port identity to a multicast table corresponding to a virtual switching instance (VSI) to which the host belongs, to obtain the first global scheduling entry corresponding to the host.

In an example of the present disclosure, in a multicast scenario, the first forwarding node acquires the system port identity of the first port, determines a VSI to which the host belongs, and adds the acquired system port identity to a multicast table corresponding to the VSI. In the multicast table, a global scheduling entry corresponding to a host includes a system port identity. After the multicast table is established, the first forwarding node can synchronize the multicast table to the second forwarding node through a BGP EVPN Type3 route packet, to cause the second forwarding node to learn the same multicast table.

In some examples, in order to realize the synchronization of the global scheduling entry shown in Fig. 9, the second packet includes a tunnel encapsulation TLV, which is an added extended TLV, and the tunnel encapsulation TLV may include a type field, a length field and a value field, as shown in Fig. 6a. The type field is to indicate that the value field carries tunnel encapsulation information; the length field is to carry a length value of the tunnel encapsulation information; the value field is to carry the tunnel encapsulation information.

In this example, as shown in Fig. 6c, the value field includes a type subfield, a length subfield and a value subfield;
the type subfield is to indicate that the value subfield carries multiple system port identities, and is such as a Type 3 field shown in Fig. 6c, where a length of the Type 3 field is 1 byte; the length subfield is to carry length values of the multiple system port identities, that is, the length subfield is to carry the length value of the value subfield, and is such as Length 3 field shown in Fig. 6c, where a length of the Length 3 field is 2 bytes; the value subfield is to carry the multiple system port identities, where a length of the value subfield is variable.

The value subfield includes a length sub-subfield and at least one value sub-subfield; the length sub-subfield is to indicate the number of the multiple system port identities (the number of value sub-subfields), and is such as Length 4 field shown in Fig. 6c, where the length of the Length 4 field is 1 byte; the value sub-subfield is to carry a system port identity, and includes such as multiple Value 3 fields shown in fig. 6c, where the length of a Value 3 field is 2 bytes.

In an example of the present disclosure, the first forwarding node carries the SysPort ID through an extended route packet, to realize the synchronization of the global scheduling entry. Based on the global scheduling entry, the second forwarding node can send packets to the first forwarding node on a packet-by-packet or cell-by-cell basis, which facilitates realization of the packet ordering function between the first forwarding node and the second forwarding node.

In some examples, in order to improve the forwarding efficiency of a data plane, the above-mentioned type subfield can also indicate that the value subfield carries an encapsulation index (i.e. an encapsulation ID); the length subfield is further to carry a length value of the encapsulated index. In this case, the value subfield can also be used to carry the encapsulation index.

When the extended route packet attribute carries the encapsulation ID, the structure of the type subfield, the length subfield and the value subfield is shown in Fig. 6d. The Type 5 field shown in Fig. 6d is the type subfield indicating that information carried in the value subfield is the encapsulation index, with a length of the Type 5 field being 1 byte; Length 5 field shown in Fig. 6d is the length subfield indicating a length value of the value subfield, with a length of the Length 5 field being 1 byte; Value 5 field shown in Fig. 6d is the value subfield carrying an encapsulation index of the type indicated by the type subfield, where the length of the Value 5 field is 2 bytes.

In the case where the encapsulation index is synchronized between the first forwarding node and the second forwarding node, when the second forwarding node sends a packet or a cell to the first forwarding node, the scheduling information encapsulated in the packet or the cell can carry the encapsulation index, and the IP address and the MAC address and the like are omitted. The data amount of the encapsulation index is less than that of the IP address and the MAC address, so that when the second forwarding node sends the packet or the cell to the first forwarding node, the date amount of transmitted data is reduced and the forwarding efficiency of the data plane is improved.

The method for entry synchronization provided by the example of the present disclosure will be described in detail in combination with the network architecture shown in Fig. 10. The network architecture shown in Fig. 10 includes two Network Cloud Fabric (NCF) nodes, i.e., NCF1-NCF2, and the NCF nodes can be understood as Spine switches. The network architecture shown in Fig. 10 also includes four NCP nodes, i.e., NCP1-NCP4, which can be understood as Leaf switches. NCP1-NCP4 are connected to five servers, i.e., server 1 to server 5. Synchronizing the global scheduling entry from NCP4 to NCP1-NCP3 is taken as an example for description. NCP1-NCP4 are BGP peers.

### (1) Learning and synchronization of a MAC entry.

Server 4 sends Packet 1 to NCP4, where a source MAC address of the packet is a MAC address of Server 4, such as aaa-bbb-ccc. After receiving the Packet 1, NCP4 acquires the MAC address of Server 4 and the SysPort ID of Port 1 on NCP4 that connects to Server 4, such as drv1 port1, where drv1 is the device ID and port1 is the port ID. In the same way, NCP4 acquires a MAC address of Server 5, i.e., aaa-bbb-ddd, and acquires the SysPort ID of Port 2 on NCP4 that connects to Server 5, such as drv2 port1.

At this time, NCP4 learns the MAC entries corresponding to Server 4 and Server 5, as shown in Table 4.

**Table 4**

| **MAC address of the host** | **Outgoing interface** |
|---|---|
| aaa-bbb-ccc | drv1 port1 |
| aaa-bbb-ddd | drv2 port1 |

NCP4 can use the above fields shown in Figs. 6a and 6b to extend a BGP EVPN Type2 route packet, or use the MPLS Label 2 field shown in Fig. 7 to carry SysPort ID; and then can synchronize the above MAC entry shown in Table 4 to NCP1-NCP3 through the BGP EVPN Type2 route packet, so that NCP1-NCP3 can acquire and record the MAC entry shown in Table 4.

After synchronizing the above MAC entry, Server 1 sending a packet to Server 4 is taken as an example for description. Server 1 sends Packet 2, where a destination MAC address of the Packet 2 is the MAC address of server 4, i.e., aaa-bbb-ccc. After receiving the Packet 2, NCP1 looks up the above table 4 according to the destination MAC address of the Packet 2, and determines that the outgoing interface is drv1 port1. According to drv1 port1, NCP1 forwards the Packet 2 to NCP4 in a polling manner through two forwarding paths indicated by the thick solid lines shown in Fig. 10.

After receiving the Packet 2, NCP4 caches the Packet 2 into Queue 1 corresponding to drv1 port1; and sends packets in Queue 1 to Server 4 after rearranging packets in Queue 1 out of order.

### (2) Learning and synchronization of a broadcast entry in VSI.

Server 4 and Server 5 belong to VSI_1. NCP4 acquires the SysPort ID of Port 1 on NCP4 that connects to Server 4, such as drv1 port1, and acquires the SysPort ID of Port 2 on NCP4 that connects to Server 5, such as drv2 port1. NCP4 adds drv1 port1 and drv2 port1 to the broadcast table corresponding to VSI_1, and obtains the broadcast entry as shown in Table 5.

**Table 5**

| **Outgoing interface** |
|---|
| drv1 port1 |
| drv2 port1 |

NCP4 can use the fields shown in Fig. 6a and Fig. 6c to expand a BGP EVPN Type3 route packet, and synchronize the broadcast entry shown in Table 5 to NCP1-NCP3 through the BGP EVPN Type3 route packet, so that NCP1-NCP3 can add the broadcast entry shown in Table 5 to the broadcast table corresponding to VSI_1 after acquiring the broadcast entry shown in Table 5, as shown in Table 6.

**Table 6**

| **Outgoing interface** |
|---|
| drv1 port1 |
| drv2 port1 |
| drv3 port1 |

In table 6, drv3 port1 is the SysPort ID of Port 3 on NCP1 that connects to Server 1. Server 1 belongs to VSI_1.

After synchronizing the above broadcast entry, Server 1 sending a packet to Server 4 is taken as an example for description. Server 1 sends Packet 3, where a destination MAC address of the Packet 3 is the MAC address of the server 4, i.e., FFF-FFF-FFF. After receiving the Packet 3, NCP1 missed the MAC entry according to the destination MAC address of the Packet 3. NCP1 acquires each SysPort ID in the broadcast entry corresponding to VSI_1; and for each SysPort ID, broadcasts the Packet 3 through multiple forwarding paths in a polling manner based on the SysPort ID.

### (3) Learning and synchronization of an ARP entry between VSIs.

Server 1 belongs to VSI_1, and Server 4 belongs to VSI_2.

Server 4 sends Packet 4 to NCP4. The source IP address of the Packet 4 is the IP address of Server 4, such as 2.2.2.2, and the source MAC address of the Packet 4 is the MAC address of Server 4, such as aaa-bbb-ccc.

After receiving the Packet 4, NCP4 acquires the IP address and MAC address of Server 4, and acquires the SysPort ID of Port 1 on NCP4 that connects to Server 4, such as drv1 port1.

At this time, NCP4 learns an ARP entry corresponding to Server 4, as shown in Table 7.

**Table 7**

| **Next hop IP address** | **MAC address of the host** | **Outgoing interface** |
|---|---|---|
| 2.2.2.2 | aaa-bbb-ccc | drv1 port1 |

NCP4 can use the above fields shown in Figs. 6a and 6b to extend a BGP EVPN Type2 route packet, or use the MPLS Label 2 field shown in Fig. 7 to carry the SysPort ID; and then synchronize the above ARP entry shown in Table 7 to NCP1-NCP3 through the BGP EVPN Type2 route packet, so that NCP1-NCP3 can acquire and record the ARP entry shown in Table 7.

After synchronizing the above ARP entry, NCP1-NCP3 can record the ARP entry as shown in Table 7 and the FIB entry as shown in Table 8.

**Table 8**

| **Destination IP address** | **Next hop IP address** | **Outgoing interface** |
|---|---|---|
| 2.2.2.2 | 2.2.2.2 | drv1 port1 |

Server 1 sending a packet to Server 4 is taken as an example for description. Server 1 sends Packet 5, where a destination IP address of the Packet 5 is the IP address of Server 4, i.e., 2.2.2.2. After receiving the Packet 5, NCP1 looks up the above Table 8 and Table 7 according to the destination IP address of the Packet 5, to determine that the outgoing interface is drv1 port1 and the destination MAC address is aaa-bbb-ccc. According to aaa-bbb-ccc and drv1 port1, NCP1 forwards the Packet 5 to NCP4 in a polling manner through two forwarding paths indicated by thick solid lines shown in Fig. 10.

After receiving the Packet 5, NCP4 caches the Packet 5 in Queue 1 corresponding to drv1 port1; after rearranging the packets in Queue 1 out of order, the packets in Queue 1 are sent to server 4.

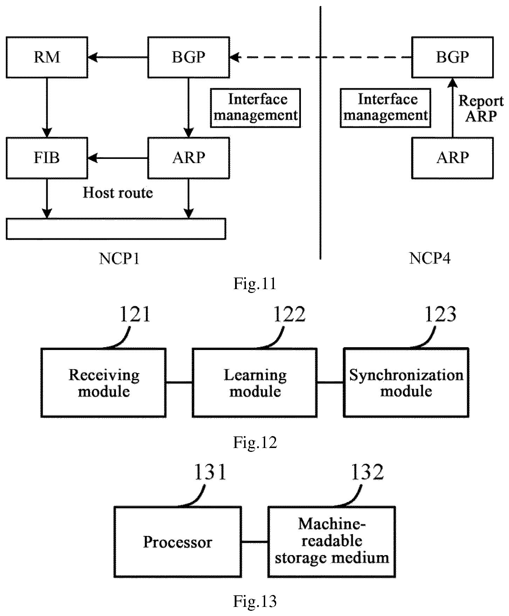

In an example of the present disclosure, the processing flow within the device for synchronizing the entry from NCP4 to NCP1 is shown in Fig. 11.

The information to be synchronized in NCP4 includes a host route, a static route and a network segment route, etc. After NCP4 has learnt the ARP entry corresponding to the host route, the static route and the network segment route, etc., NCP4 reports the ARP entry to a BGP module; the BGP module adds a local encapsulation index as well as a corresponding SysPort ID to the ARP entry, and synchronizes the ARP entry to NCP1. The SysPort ID is set on the interface by a driver and is managed by an interface management module. The BGP module adds the local encapsulation index and the corresponding SysPort ID to the ARP entry in the manner shown in Figs. 6a-6d or Figs. 7-8, so as to synchronize the ARP entry to NCP1, where the ARP entry can be carried in the second packet.

When the above synchronized information is the host route and the static route, the ARP entry carries the next-hop IP address and SysPort ID. When the above synchronized information is the network segment route, the synchronization is performed for the ARP entry corresponding to a silent host. In addition, the network segment route can only carry the SysPort ID.

For the host route and the static route, the BGP module of NCP1 sends the ARP entry to the ARP module after receiving the ARP entry, and the ARP module generates the host route according to the ARP entry and informs a FIB module to generate a FIB entry.

For the network segment route, the BGP module of NCP1 notifies the ARP entry to a route management (RM) module after receiving the ARP entry; the RM module sends the ARP the ARP entry to the FIB module, and the FIB module generates the FIB entry.

Corresponding to the above-mentioned method for entry synchronization, an examples of the present disclosure also provides an apparatus for entry synchronization, as shown in Fig. 12, applied to a first forwarding node, wherein the first forwarding node is in an AI network and connected to a host via a first port, and the apparatus including:
a receiving module 121, to receive a first packet sent by the host;
a learning module 122, to learn a first global scheduling entry corresponding to the host according to the first packet, wherein the first global scheduling entry includes a system port identity of the first port, and the system port identity includes a device identity and a port identity;
a synchronization module 123, to send a second packet to a second forwarding node in the AI network, wherein the second packet includes the first global scheduling entry, to cause the second forwarding node to learn a second global scheduling entry which is the same as the first global scheduling entry.

In some examples, the learning module 122 can be specifically to acquire a source address included in the first packet and acquire the system port identity of the first port; learn the first global scheduling entry corresponding to the host based on the acquired source address and the acquired system port identity.

In some examples, the second packet includes a tunnel encapsulation TLV, and the tunnel encapsulation TLV includes a type field, a length field and a value field; the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; the type subfield is to indicate that the value subfield carries one system port identifier; the length subfield is to carry a length value of the one system port identity; the value subfield is to carry the one system port identity.

In some examples, the second packet is an EVPN Type2 route packet, and a Network Reachability Information Label 2 field included in the EVPN Type2 route packet carries the system port identity.

In some examples, the second packet includes an EVPN Type2 route packet and an EVPN Type5 route packet;
a Network Reachability Information Label 2 field included in the EVPN Type2 route packet carries the system port identity;
a gateway address field included in the EVPN Type5 route packet carries an IP address of the host.

In some examples, the learning module 122 can be specifically to: acquire the system port identity of the first port, wherein the first port is to receive the first packet; add the system port identity to a multicast table corresponding to a virtual switching instance to which the host belongs, to obtain the first global scheduling entry..

In some examples, the second packet includes a tunnel encapsulation TLV, and the tunnel encapsulation TLV includes a type field, a length field and a value field;
the type field is to indicate that the value field carries tunnel encapsulation information; the length field is to carry a length value of the tunnel encapsulation information; the value field is to carry the tunnel encapsulation information;
the value field includes a type subfield, a length subfield and a value subfield; wherein the type subfield is to indicate that the value subfield carries multiple system port identities; the length subfield is to carry length values of the multiple system port identities; the value subfield is to carry the multiple system port identities;
the value subfield includes a length sub-subfield and at least one value sub-subfield; wherein the length sub-subfield is to indicate a number of the multiple system port identities; the value sub-subfield is to carry one system port identifier.

In some examples, the type subfield is further to indicate that the value subfield carries a encapsulation index; the length subfield is further to carry a length value of the encapsulation index; the value subfield is further to carry the encapsulation index.

In the technical solutions provided by the examples of the present disclosure, the forwarding node carries the global scheduling entry in the packet and sends it to another forwarding node, to cause the another forwarding node to learn the same global scheduling entry, that is, each global scheduling entry includes the system port identity of the port connected to the host when the host accesses the forwarding node. In the examples of the present disclosure, the synchronization of the global scheduling entry between forwarding nodes is realized by transmitting a packet between the forwarding nodes, and a controller is not necessary for synchronizing the global scheduling entry, which reduces the influence of the entry synchronization on the control plane, and improves the performance and extensibility of the control plane.

An example of the present disclosure also provides a network device, as shown in Fig. 13, which includes a processor 131 and a machine-readable storage medium 132 having machine-executable instructions stored therein that can be executed by the processor 131, wherein the machine-executable instructions cause the processor 131 to carry out any one of the above-mentioned methods for entry synchronization.

The machine-readable storage medium may include a Random Access Memory (RAM) or a Non-Volatile Memory (NVM), such as at least one disk memory. Alternatively, the machine-readable storage medium may also be at least one storage device located away from the aforementioned processor.

The processor can be a general-purpose processor, including a Central Processing Unit (CPU) and a Network Processor (NP) or the like. It can also be a Digital Signal Processor (DSP), an application specific integrated circuit (ASIC), a Field-Programmable Gate Array (FPGA) or other programmable logic devices, discrete gate or transistor logic devices, and discrete hardware components.

In yet another example provided by the present disclosure, a machine-readable storage medium is also provided, which has a computer program stored therein, wherein the computer program, when executed by a processor, carries out any one of the above-mentioned methods for entry synchronization.

In yet another example provided by the present disclosure, a computer program is also provided, which, when executed by a processor, carries out any one of the above-mentioned methods for entry synchronization.

The above examples can be realized in whole or in part by software, hardware, firmware or any combination thereof. When implemented by software, it can be fully or partially implemented in the form of a computer program product. The computer program product includes one or more computer instructions. When the computer program instructions are loaded and executed on a computer, the flow or function described in the examples of the present disclosure is generated in whole or in part. The computer can be a general-purpose computer, a dedicated computer, a computer network, or other programmable devices. The computer instructions can be stored in a computer-readable storage medium or transmitted from a computer-readable storage medium to another. For example, the computer instructions can be transmitted from a website, computer, server or data center to another website, computer, server or data center by wire (such as coaxial cable, optical fiber, digital subscriber line (DSL)) or wirelessly (such as infrared, wireless, microwave, or the like). The computer-readable storage medium can be any available medium that a computer can access or a data storage device such as a server, a data center and the like that contains one or more available media. The available medium may be a magnetic medium (e.g., a floppy disk, a hard disk, a magnetic tape), an optical medium (e.g., DVD), or a semiconductor medium (e.g., a Solid State Disk (SSD)) and the like.

It should be noted that in the present disclosure, relational terms such as first and second are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one..." does not exclude the existence of other identical elements in the process, method, article or device including the element.

Each example in this specification is described in a related way, and the same and similar parts between the examples can be referred to each other, and each example focuses on the differences from other examples. Especially, regarding the examples of the apparatus, network device, storage medium and computer program, the description thereof is relatively simple since they are basically similar to the examples of the method, and the relevant points can be referred to the part of description of the examples of the method.

The above are only the preferred examples of the present disclosure, and are not used to limit the present disclosure. Any modification, equivalent replacement, improvement, etc. made within the spirit and principle of the present disclosure should be included in the scope of protection of the present disclosure.

## Claims

1. A method for entry synchronization applied to a first forwarding node, wherein the first forwarding node is in an artificial intelligence AI network and connected to a host via a first port, the method comprising:
receiving a first packet sent by the host;
learning a first global scheduling entry corresponding to the host according to the first packet, wherein the first global scheduling entry comprises a system port identity of the first port, and the system port identity comprises a device identity and a port identity;
sending a second packet to a second forwarding node in the AI network, wherein the second packet comprises the first global scheduling entry, to cause the second forwarding node to learn a second global scheduling entry which is the same as the first global scheduling entry.

2. The method according to claim 1, wherein learning the first global scheduling entry corresponding to the host according to the first packet specifically comprises:
acquiring a source address comprised in the first packet and acquiring the system port identity of the first port;
learning the first global scheduling entry corresponding to the host based on the acquired source address and the acquired system port identity.

3. The method according to claim 2, wherein the second packet comprises a tunnel encapsulation TLV, and the tunnel encapsulation TLV comprises a type field, a length field and a value field;
the type field is to indicate that the value field carries tunnel encapsulation information; the length field is to carry a length value of the tunnel encapsulation information; the value field is to carry the tunnel encapsulation information;
the value field comprises a type subfield, a length subfield and a value subfield; wherein the type subfield is to indicate that the value subfield carries one system port identity; the length subfield is to carry a length value of the one system port identity; the value subfield is to carry the one system port identity.

4. The method according to claim 2, wherein the second packet is an EVPN Type2 route packet, and a Network Layer Reachability Information Label 2 field comprised in the EVPN Type2 route packet carries the system port identity.

5. The method according to claim 2, wherein the second packet comprises an EVPN Type2 route packet and an EVPN Type5 route packet;
a Network Layer Reachability Information Label 2 field comprised in the EVPN Type2 route packet carries the system port identify;
a gateway address field comprised in the EVPN Type5 route packet carries an IP address of the host.

6. The method according to claim 1, wherein learning the first global scheduling entry corresponding to the host according to the first packet specifically comprises:
acquiring the system port identity of the first port, wherein the first port is to receive the first packet;
adding the system port identity to a multicast table corresponding to a virtual switching instance to which the host belongs, to obtain the first global scheduling entry corresponding to the host.

7. The method according to claim 6, wherein the second packet comprises a tunnel encapsulation TLV, and the tunnel encapsulation TLV comprises a type field, a length field and a value field;
the type field is to indicate that the value field carries tunnel encapsulation information; the length field is to carry a length value of the tunnel encapsulation information; the value field is to carry the tunnel encapsulation information;
the value field comprises a type subfield, a length subfield and a value subfield; wherein the type subfield is to indicate that the value subfield carries multiple system port identities; the length subfield is to carry length values of the multiple system port identities; the value subfield is to carry the multiple system port identities;
the value subfield comprises a length sub-subfield and at least one value sub-subfield; wherein the length sub-subfield is to indicate a number of the multiple system port identities; the value sub-subfield is to carry one system port identifier.

8. The method according to claim 3 or 7, wherein the type subfield is further to indicate that the value subfield carries a encapsulation index; the length subfield is further to carry a length value of the encapsulation index; the value subfield is further to carry the encapsulation index.

9. An apparatus for entry synchronization applied to a first forwarding node, wherein the first forwarding node is in an artificial intelligence AI network and connected to a host via a first port, the apparatus comprising:
a receiving module, to receive a first packet sent by the host;
a learning module, to learn a first global scheduling entry corresponding to the host according to the first packet, wherein the first global scheduling entry comprises a system port identity of the first port, and the system port identity comprises a device identity and a port identity;
a synchronization module, to send a second packet to a second forwarding node in the AI network, wherein the second packet comprises the first global scheduling entry, to cause the second forwarding node to learn a second global scheduling entry which is the same as the first global scheduling entry.

10. The apparatus according to claim 9, wherein the learning module is specifically to:
acquire a source address comprised in the first packet and acquire the system port identity of the first port; learn the first global scheduling entry corresponding to the host based on the acquired source address and the acquired system port identity.

11. The apparatus according to claim 10, wherein the second packet comprises a tunnel encapsulation TLV, and the tunnel encapsulation TLV comprises a type field, a length field and a value field;
the type field is to indicate that the value field carries tunnel encapsulation information; the length field is to carry a length value of the tunnel encapsulation information; the value field is to carry the tunnel encapsulation information;
the value field comprises a type subfield, a length subfield and a value subfield; the type subfield is to indicate that the value subfield carries one system port identifier; the length subfield is to carry a length value of the one system port identity; the value subfield is to carry the one system port identity.

12. The apparatus according to claim 10, wherein the second packet is an EVPN Type2 route packet, and a Network Reachability Information Label 2 field comprised in the EVPN Type2 route packet carries the system port identity.

13. The apparatus according to claim 10, wherein the second packet comprises an EVPN Type2 route packet and an EVPN Type5 route packet;
a Network Reachability Information Label 2 field comprised in the EVPN Type2 route packet carries the system port identity;
a gateway address field comprised in the EVPN Type5 route packet carries an IP address of the host.

14. The apparatus according to claim 9, wherein the learning module is specifically to:
acquire the system port identity of the first port, wherein the first port is to receive the first packet; add the system port identity to a multicast table corresponding to a virtual switching instance to which the host belongs, to obtain the first global scheduling entry.

15. The apparatus according to claim 14, wherein the second packet comprises a tunnel encapsulation TLV, and the tunnel encapsulation TLV comprises a type field, a length field and a value field;
the type field is to indicate that the value field carries tunnel encapsulation information; the length field is to carry a length value of the tunnel encapsulation information; the value field is to carry the tunnel encapsulation information;
the value field comprises a type subfield, a length subfield and a value subfield; wherein the type subfield is to indicate that the value subfield carries multiple system port identities; the length subfield is to carry length values of the multiple system port identities; the value subfield is to carry the multiple system port identities;
the value subfield comprises a length sub-subfield and at least one value sub-subfield; wherein the length sub-subfield is to indicate a number of the multiple system port identities; the value sub-subfield is to carry one system port identifier.

16. The apparatus according to claim 11 or 15, wherein the type subfield is further to indicate that the value subfield carries a encapsulation index; the length subfield is further to carry a length value of the encapsulation index; the value subfield is further to carry the encapsulation index.

17. A network device, comprising a processor and a machine-readable storage medium having a computer program stored therein that can be executed by the processor, wherein computer program causes the processor to carry out the method according to any one of claims 1-8.

18. A machine-readable storage medium having a computer program stored therein, wherein the computer program, when executed by a processor, carries out the method according to any one of claims 1-8.

19. A computer program which, when executed by a processor, carries out the method according to any one of claims 1-8.
